# EUROPÄISCHE PATENTANMELDUNG

(11) **EP 0 816 822 A2**
(43) Veröffentlichungstag der Anmeldung: **07.01.1998**
(21) Anmeldenummer: 97110539.0
(22) Anmeldetag: 27.06.1997
(51) Int. Cl.: G01N 1/22

(54) **Vorrichtung zur Entnahme von fluiden Medien**

(30) Priorität: 28.06.1996 DE 19625813
(71) Anmelder: ECM Ingenieur-Unternehmen für Energie-und Umwelttechnik GmbH, 81539 München (DE); IABG Industrieanlagen-Betriebsgesellschaft mbH, 85521 Ottobrunn (DE)
(72) Erfinder: Krödel, Matthias, 85521 Ottobrunn (DE); Papenburg, Ulrich, 85658 Egmating (DE)

(57) **Zusammenfassung**

Die Erfindung betrifft eine Vorrichtung zur Entnahme von fluiden, insbesondere heißen und/oder korrosiven Medien, wie z.B. Rauchgasen.

Aufgabe der Erfindung ist es, bei hohen Temperaturen und/oder einer korrosiven Atmosphäre Gase zu entnehmen, damit diese konventionellen Analysegeräten, beispielweise O₂-Analysatoren, zugeführt werden können.

Gemäß der Erfindung wird dies dadurch erreicht daß die Vorrichtung aus einem Rohrkörper (1) und einem Flansch (2) aus kohlenstoffaserverstärktem Siliciumcarbid (C/SiC) besteht, wobei beide Teile keramisch miteinander verbunden sind.

Die Geometrie der Entnahmevorrichtungen kann auf die entsprechenden Strömungsverhältnisse in der Meßumgebung abgestimmt werden.

Anwendungsgebiet der Erfindung ist die Meßtechnik bei hohen Temperaturen und/oder korrosiver Atmosphäre.

## Beschreibung

Die Erfindung betrifft eine Vorrichtung zur Entnahme von fluiden Medien mit einem Entnahmerohr und einem Flansch, wobei beide Teile aus keramischem Material bestehen.

Bei einer bekannten Ausführungsform bestehen Rohr und Flansch jeweils aus einer hoch hitzebeständigen Stahllegierung (z. B. Incaloy, Sicromal). Bei höheren Betriebstemperaturen und/oder in Gegenwart von korrosiven Medien (Säuren und Laugen) besteht hierbei die Gefahr, daß Korrosion und Zunderbildung zu einem rapiden Materialabtrag führen.

Derartige metallische Entnahmevorrichtungen besitzen eine Standzeit von wenigen Tagen/Wochen.

Der Erfindung liegt die Aufgabe zugrunde, eine keramische Entnahmevorrichtung mit hoher Temperatur-, Korrosions- und Abdebsfestigkeit bei einer nahezu unbegrenzten Geometrie-und Formenvielfalt zu schaffen.

Zur Lösung dieser Aufgabe ist die Entnahmevorrichtung der eingangs genannten Art erfindungsgemäß dadurch gekennzeichnet, daß das Entnahmerohr und der Flansch aus kohlenstoffaserverstärktem Siliciumcarbid (C/SiC) bestehen und keramisch miteinander verbunden sind. Entnahmerohr und Flansch bestehen also aus ein und demselben Werkstoff und bilden eine monolithische Struktur.

Wärmeausdehnungsprobleme, wie sie bei Metall-Keramikverbindungen auftreten, können dementsprechend ausgeschlossen werden. Die bei den metallischen Entnahmevorrichtungen beobachteten vermehrten Korrosionsanfälligkeiten an den Schweißnähten zwischen Rohr und Flansch können ebenfalls ausgeschlossen werden.

Durch die Hochtemperaturbeständigkeit, verbunden mit einer ausgezeichneten Korrosionsbeständigkeit, erhöht sich die Standzeit der Hochtemperaturentnahmevorrichtung aus faserverstärkter Keramik erheblich.

Es wurde gefunden, daß C/SiC über hervorragende Festigkeitseigenschaften bis zu hohen Temperaturen verfügt, die einen Einsatz auch unter schweren Bedingungen ermöglichen. Hinzu kommen die hohe chemische Beständigkeit, hohe Härte, Oxidationsbeständigkeit sowie neben der Temperaturbeständigkeit eine hohe Temperaturwechselbeständigkeit. Die hohe Härte des C/SiC-Verbundwerkstoffes führt in Gegenwart von abrasiven Stäuben im Rauchgas (z.B. Flugasche) ebenfalls zu einer verbesserten Verschleißbeständigkeit. Das Material besitzt eine sehr geringe Dichte, so daß es sich leicht handhaben läßt und besonderes für HT-Entnahmevorrichtungen großer Abmessungen geeignet ist.

Besonders hervorzuheben sind die große Geometrie- und Formenvielfalt sowie die hervorragende Temperatur- und Korrosionsbeständigkeit, die entsprechend hohe Standzeiten ermöglichen.

Man unterscheidet C/SiC mit kontinuierlicher Faserverstärkung sowie kurzfaserverstärktes C/SiC. Das erstgenannte Material, das gewickelt werden kann, zeichnet sich durch besonders hohe Festigkeit, schadenstolerantes Bruchverhalten (Schlagfestigkeit) und besonderes niedrige Dichte aus. Zur Erhöhung der Oxidationsbeständigkeit kann mit einer Oberflächenversiegelung gearbeitet werden. Letztere ist bei kurzfaserverstärktem C/SiC überflüssig, da das Material besonders oxidations- und korrosionsbeständig ist. Auch verfügt es über eine extrem hohe Härte und zeichnet sich durch besonders hohe Thermoschockbeständigkeit aus.
Es eignet sich vor allen Dingen für eine mechanische Bearbeitung der C/SiC-Rohlinge im Grünzustand.

Vorteilhafterweise können die Entnahmerohre einen runden, rechteckigen, ovalen oder schlitzförmigen Querschnitt aufweisen. Sowohl die gewickelten Entnahmerohre als auch die im Grünzustand bearbeiteten kurzfaserverstärkten Entnahmerohre werden bei der anschließenden Infiltration zusammen siliziert, so daß eine monolithische Struktur entsteht.

Dies hat den großen Vorteil im Vergleich zu metallischen Werkstoffen, daß die Rohlinge im Grünzustand in relativ kleinen Einzelbauteilen gefertigt werden können und erst anschließend zu dem endgültigen Bauteil keramisch verbunden werden. Diese Bearbeitungsmethode ermöglicht auch eine Minimierung bei den Herstellungskosten.

Eine Verfahrensvariante sieht vor, daß man die keramischen Rohre und Flansche auch nach der Infiltration über Keramikkleber miteinander fest verbinden kann.

Die Erfindung wird im folgenden anhand bevorzugter Ausführungsbeispiele im Zusammenhang mit den beiliegenden Zeichnungen näher erläutert.

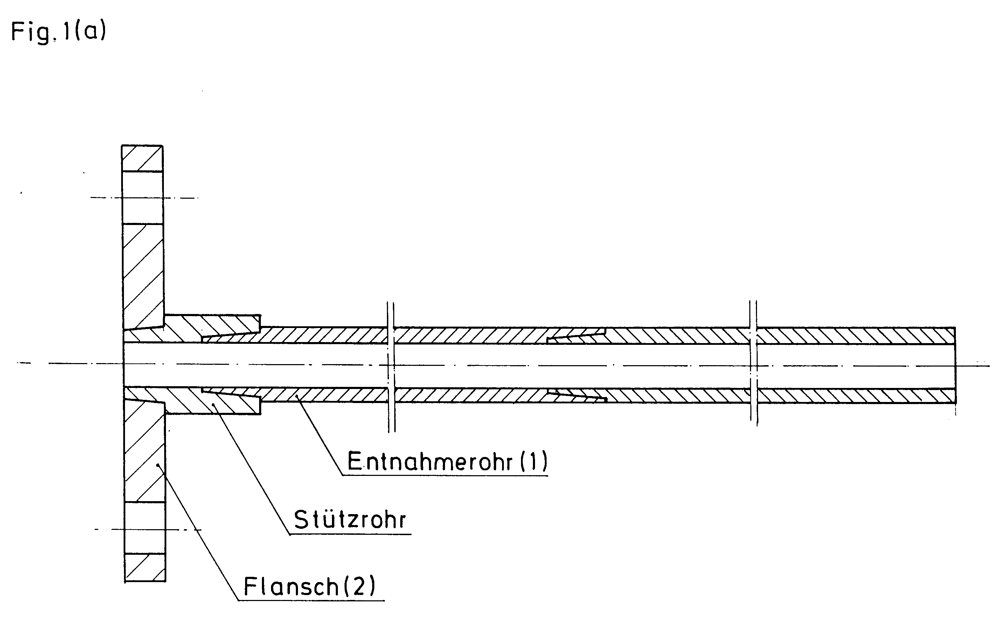

- Figur 1 zeigt einen axialen Schnitt durch eine erste Ausführungsform im Grünzustand (a) und nach der Infiltration (b).
- Figur 2 zeigt einen axialen Schnitt durch eine zweite Ausführungsform.

### BESCHREIBUNG DER BILDER UND FUNKTIONSPRINZIP VERSCHIEDENER ANWENDUNGSBEISPIELE

### Figur 1 (a)

Aus dieser Zeichnung ist zu entnehmen, daß die Entnahmevorrichtung aus mindestens drei Bauteilen- Entnahmerohr, Flansch, Stützrohr - im Grünzustand besteht. Je nach Länge des Entnahmerohrs kann dies aus beliebig vielen Einzelbauteilen zusammengesetzt werden.

### Figur 1 (b)

Nach der Infiltration sind sämtliche Einzelbauteile miteinander zu einem einzigen Bauteil (monolithische Struktur) verbunden.

Der Einsatz der Entnahmevorrichtung im Endzustand ist derart charakterisiert, daß die Entnahmevorrichtung in einen bauseits vorhandenen Stutzen am Meßort unter Verwendung von handelsüblichen Schrauben verschraubt wird.
Das zu analysierende Medium wird durch Unterdruck über die Entnahmevorrichtung aus dem Reaktorraum gesaugt und dem entsprechend nachgeschalteten konventionellen Analysator zugeführt. Diese Art der Entnahmevorrichtung eignet sich zum Beispiel für den Einsatz bei Gasentnahmen zur Steuerung von Verbrennungsprozessen, wie z.B. O₂, CO oder SO₂.

Nach derzeitigem Stand der Technik werden diese Entnahmevorrichtungen aus metallischem Werkstoff gefertigt und weisen die bereits o.g. Probleme hinsichtlich ihrer Beständigkeit und den damit verbundenen geringen Standzeiten auf. Im Rahmen der Erfindung sind durchaus Abwandlungsmöglichkeiten gegeben.

### Figur 2

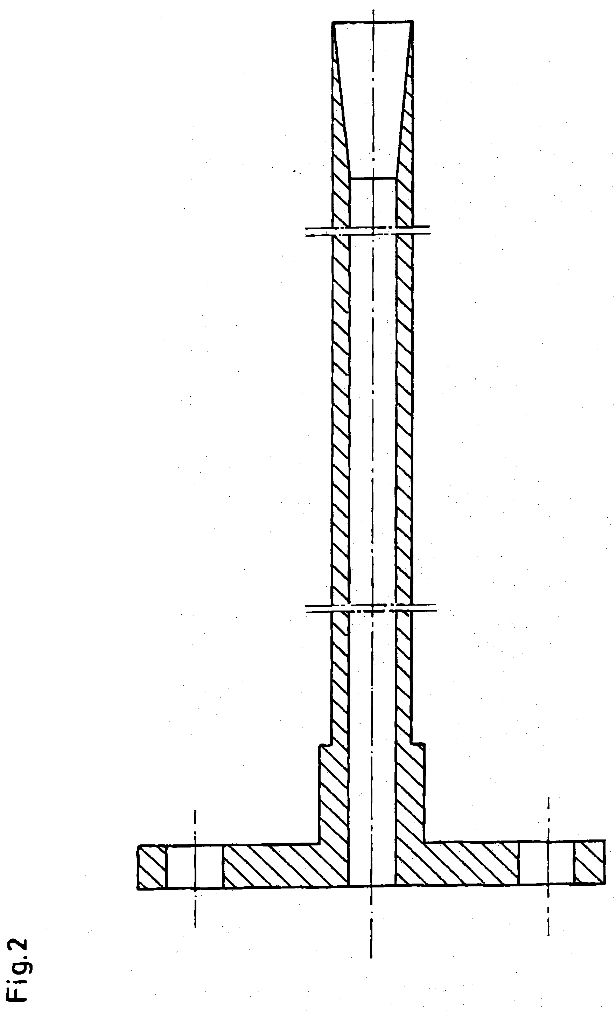

Die in der Figur 2 beschriebene Anwendungsform ist dadurch gekennzeichnet, daß das Entnahmerohr speziell auf die isokinetischen Erfordernisse für die Entnahme von Gasen mit hohem Partikelanteil ausgelegt ist. Dabei werden die Gase, wie bereits oben beschrieben, mittels Unterdruck aus dem Analysenraum abgezogen und einem nachgeschalteten Analysator zugeführt.

## Patentansprüche

1. Vorrichtung zur Entnahme von fluiden Medien, insbesondere heißen, korrosiven Rauchgasen mit einem Entnahmerohr (1) und einem Flansch (2), wobei beide Bauteile aus keramischem Material bestehen, dadurch gekennzeichnet, daß das Entnahmerohr (1) und der Flansch (2) aus kohlenstoffaserverstärktem Siliciumcarbid (C/SiC) bestehen und keramisch miteinander verbunden sind.

2. Vorrichtung zur Entnahme von fluiden Medien nach Anspruch 1, dadurch gekennzeichnet, daß das Entnahmerohr (1) mit dem Flansch (2) zusammensiliziert ist.

3. Vorrichtung zur Entnahme von fluiden Medien nach Anspruch 1 und 2, dadurch gekennzeichnet, daß die Bauform des Entnahmerohrs auf die Strömungsverhältnisse in der Meßumgebung abgestimmt wird.

4. Vorrichtung zur Entnahme von fluiden Medien nach Anspruch 1 und 3, dadurch gekennzeichnet, daß das Entnahmerohr (1) einen runden, rechteckigen, ovalen oder schlitzförmigen Querschnitt aufweist.

5. Vorrichtung zur Entnahme von fluiden Medien nach Anspruch 1 und 2, dadurch gekennzeichnet, daß die keramische Verbindung von Rohr und Flansch über die Siliczierung und/oder die Klebung mit Keramikkleber erfolgt.
